# EUROPEAN PATENT APPLICATION

(11) **EP 4 447 180 A1**
(43) Date of publication of application: **16.10.2024**
(21) Application number: 23903807.8
(22) Date of filing: 22.11.2023
(51) Int. Cl.: H01M 10/0562

(54) **COMPLEX SULFIDE-BASED SOLID ELECTROLYTE AND METHOD FOR PRODUCING SAME**

(30) Priority: 15.12.2022 KR 20220176307
(71) Applicant: LG Energy Solution, Ltd., Seoul 07335 (KR)
(72) Inventor: CHOI, Seokin, Daejeon 34122 (KR); KIM, Youngbok, Daejeon 34122 (KR); LEE, Wonrak, Daejeon 34122 (KR)
(74) Representative: Goddar, Heinz J.
(86) International application number: PCT/KR2023/018872
(87) International publication number: WO 2024/128604

(57) **Abstract**

The present invention relates to a composite sulfide-based solid electrolyte which is secondary particles comprising a plurality of primary particles and a lithium halide represented by Formula 1 below, wherein the primary particles comprise a sulfide-based solid electrolyte and the lithium halide is located between the primary particles, and a method of preparing the same:

[Formula 1] LiX

wherein X is any one selected from F, Cl. Br and I.

## Description

### [Technical Field]

The present application claims the benefit and priority to Korean Patent Application No. 10-2022-0176307, filed December 15, 2022, the disclosure of which is incorporated herein by reference in its entirety.

The present invention relates to a composite sulfide-based solid electrolyte and a method for preparing the same.

### [Related Art]

The increasing demand for electric vehicles and large-capacity power storage has led to the development of various secondary batteries to meet this demand.

Lithium secondary batteries have been widely commercialized because they have the best energy density and output characteristics among various secondary batteries. Lithium secondary batteries containing a liquid electrolyte containing an organic solvent (hereinafter referred to as "liquid secondary batteries") are mainly used as lithium secondary batteries.

However, in liquid secondary batteries, the liquid electrolyte is decomposed by the electrode reaction, causing the battery to expand, and the risk of ignition due to leakage of the liquid electrolyte has been pointed out. In order to solve these problems of liquid secondary batteries, lithium secondary batteries (hereinafter referred to as "all-solid-state batteries") with solid electrolytes with excellent stability are attracting attention.

Solid electrolytes can be broadly categorized into polymeric, oxide-based and sulfide-based solid electrolytes. Sulfide-based solid electrolytes are characterized by their soft characteristic compared to oxide-based solid electrolytes, which means that they can be pressurized at room temperature without any sintering process to impart excellent interparticle contact properties. As a result, sulfide-based solid electrolytes are gaining attention because they can exhibit high ionic conductivity with low contact resistance compared to oxide-based solid electrolytes.

However, sulfide-based solid electrolytes have a disadvantage of being less stable when applied to all-solid-state batteries because their chemical stability is relatively lower than that of oxide-based solid electrolytes. That is, sulfide-based solid electrolytes are prone to react with atmospheric moisture or process moisture due to various factors such as residual L₂S or P₂S₇ cross-linking sulfur in the electrolytes. Because of this, sulfide-based solid electrolytes may react with moisture to produce hydrogen sulfide (H₂S) gas, so they are handled in environments such as gloveboxes with an argon gas atmosphere and dry rooms where moisture is removed. In addition, sulfide-based solid electrolytes have problems in the manufacturing process, such as a decrease in ionic conductivity due to the effect of hydrogen sulfide gas generated by reacting with moisture.

As such, since conventional sulfide-based solid electrolytes require demanding handling conditions, in manufacturing all-solid-state batteries using sulfide-based solid electrolytes, large-scale areaization and mass production are difficult.

### [Prior Art References]

### [Patent Literature]

Korean Patent Laid-open Publication No. 10-2019-0079135 (July 5, 2019)

### [Detailed Description of the Invention]

### [Technical Problem]

It is an object of the present invention to provide a composite sulfide-based solid electrolyte capable of preventing a decrease in ionic conductivity by improving the water resistance of the solid electrolyte due to prolonged exposure to moisture in the manufacture of an all-solid-state battery, by forming a composite sulfide-based solid electrolyte in the form of a secondary particle in which lithium halide is mixed with sulfide-based solid electrolyte.

Another object of the present invention is to provide a method of preparing the composite sulfide-based solid electrolyte.

### [Technical Solution]

One Example of the present invention provides a composite sulfide-based solid electrolyte which is secondary particles comprising a plurality of primary particles and a lithium halide represented by Formula 1 below, wherein the primary particles comprise a sulfide-based solid electrolyte and the lithium halide is located between the primary particles:

[Formula 1] LiX,

wherein X is any one selected from F, Cl, Br and I.

The average particle size (D50) of the lithium halide may be 0.01 to 3 µm,

The average particle size (D50) of the secondary particles of the composite sulfide-based solid electrolyte may be 0.11 to 100 µm.

Based on a total of 100 parts by weight of the composite sulfide-based solid electrolyte, the content ratio of sulfide-based solid electrolyte in the primary particles and lithium halide may be 99.9 parts by weight: 0.1 parts by weight to 80 parts by weight: 20 parts by weight.

The sulfide-based solid electrolyte may comprise an argyrodite-type crystal structure.

The average particle size (D50) of the primary particles may be 0.1 to 15 µm.

In a composite sulfide-based solid electrolyte of the secondary particles, the lithium halide may not be formed as a coating layer on the primary particles.

The sulfide-based solid electrolyte of the primary particles may be represented by Formula 2 below:

[Formula 2] LiₖM¹ₗSₘX¹ₙ,

wherein M¹ is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, Wor La, X¹ is F, Cl, Br, I, Se, Te or O, and 0<k≤6, 0<l≤6, 0<m≤6, and 0≤n≤6.

Another Example of the present invention provides an all-solid-state battery comprising thecomposite sulfide-based solid electrolyte.

Another Example of the present invention provides a method of preparing a composite sulfide-based solid electrolyte, comprising the steps of preparing a sulfide-based solid electrolyte and lithium halide represented by Formula 1 below; grinding the lithium halide; and mixing the grinded lithium halide with the sulfide-based solid electrolyte:

[Formula 1] LiX,

wherein X is any one selected from F, Cl. Br and I.

Prior to grinding the lithium halide, the method may further comprise the step of vacuum drying the lithium halide to remove moisture.

The lithium halide may be formed by grinding through 5 to 20 repeated cycles of ball-milling, with each cycle of ball-milling performed at 100 to 2,000 rpm for 5 to 30 minutes.

The average particle size (D50) of the ground lithium halide may be 0.01 to 3 µm.

The ground lithium halide and the sulfide-based solid electrolyte may be mixed in a content ratio of 99.9 parts by weight: 0.1 parts by weight to 80 parts by weight: 20 parts by weight, based on a total of 100 parts by weight of the composite sulfide-based solid electrolyte.

### [Advantageous Effects]

According to the present invention, by forming a composite sulfide-based solid electrolyte in the form of a secondary particle so that lithium halide particles having a relatively small size are located in voids between primary particles of the sulfide-based solid electrolyte, it has the effect of improving the water resistance of the solid electrolyte, thereby preventing the decrease of the ionic conductivity of the all-solid-state battery.

### [Brief Description of Drawing]

FIG. 1 is a schematic representation of a composite sulfide-based solid electrolyte according to one Example of the present invention.
FIG. 2 is a schematic illustration of a sulfide-based solid electrolyte that does not contain lithium halide, according to a comparative example of the present invention.

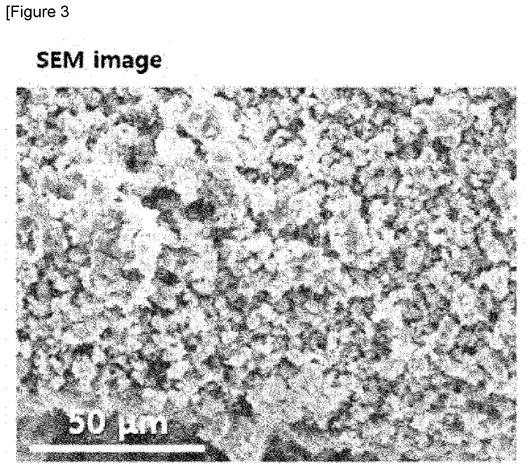

FIG. 3 is a Scanning Electron Microscope (SEM) image of a composite sulfide-based solid electrolyte according to one Example of the present invention.
FIGs. 4 and 5 show the results of an Energy Dispersive X-ray Spectroscopy (EDX) analysis of a composite sulfide-based solid electrolyte according to one Example of the present invention.
FIG. 6 is a graph depicting the change in ionic conductivity over time of a composite sulfide-based solid electrolyte according to one Example of the present invention.
FIG. 7 is a graph depicting the change in normalized ionic conductivity over time of a composite sulfide-based solid electrolyte according to one Example of the present invention.
FIG. 8 is a graph showing an electrochemical impedance spectroscopy (EIS) analysis of lithium halide (LiBr).
FIG. 9 is a graph showing the electrochemical impedance spectroscopy (EIS) analysis of Li₆PS₅Cl, a sulfide-based solid electrolyte with an argyrodite crystalline structure.

### [Best Mode for Practicing the Invention]

Examples of the present invention are described in detail. It should be noted that the terms and words used in this specification and claims are not to be construed in their ordinary or dictionary sense, but are to be interpreted in a sense and concept consistent with the technical idea of the present invention, based on the principle that the inventor(s) may properly define the concept of a term to best describe his/her invention. Accordingly, it is to be understood that the compositions described in the Examples set forth herein are only the most preferred Examples of the present invention and are not exhaustive of the technical ideas of the present invention, and that there may be various equivalents and variations that may be substituted for them at the time of filing.

Throughout the specification, when a part "includes" a component, it may indicate further including other components, not excluding other components, unless stated to the contrary.

In addition, the description limiting or adding components may apply to any invention and is not limited to any particular invention, unless otherwise specified.

Also, throughout the description and claims of the present invention, the singular expressions include the plural expressions, unless otherwise noted.

Furthermore, throughout the description and claims of the present invention, "or" includes "and," unless otherwise noted. Thus, "comprising A or B" indicates all these three cases: comprising A, comprising B, and comprising A and B.

Moreover, all numerical ranges include the values at both ends and all intermediate values therebetween, unless explicitly stated to exclude them.

Throughout the specification, the average particle size of a particle may be, for example, a median diameter (D50) measured using a laser particle size distribution meter.

A composite sulfide-based solid electrolyte according to one Example of the present invention is described below.

The present invention relates to a composite sulfide-based solid electrolyte and a method for preparing the same, which can improve the water resistance of a solid electrolyte to prevent a decrease in the ionic conductivity of an all-solid-state battery due to the influence of external moisture in the manufacture of an all-solid-state battery, thereby improving its electrochemical and lifetime characteristics.

In general, sulfide-based solid electrolytes have the advantage of excellent interparticle contact and low contact resistance by pressurization at room temperature without a separate sintering process, enabling the expression of high ionic conductivity. However, hydrogen sulfide (H₂S) gas is easily generated by reacting with moisture in the atmosphere or moisture introduced during the manufacturing process, resulting in a decrease in ionic conductivity, which is a key property of solid electrolytes.

To improve this problem, attempts have been made to form a coating layer on the surface of sulfide-based solid electrolyte particles to block the reaction with moisture, but the material contained in the coating layer acts as a resistive layer, further reducing the ionic conductivity of the solid electrolyte.

In order to solve the above problem, the present invention mixes the primary particles, the sulfide-based solid electrolyte, with lithium halide to form a solid electrolyte in the form of secondary particles, instead of forming a separate coating layer on the sulfide-based solid electrolyte particles. In particular, by positioning the lithium halide in the empty spaces between the primary particles of the sulfide-based solid electrolyte, it was found that the lithium halide has the function of adsorbing external moisture, thereby improving the water resistance of the sulfide-based solid electrolyte, and that the generation of hydrogen sulfide is reduced so that high ionic conductivity can be exhibited.

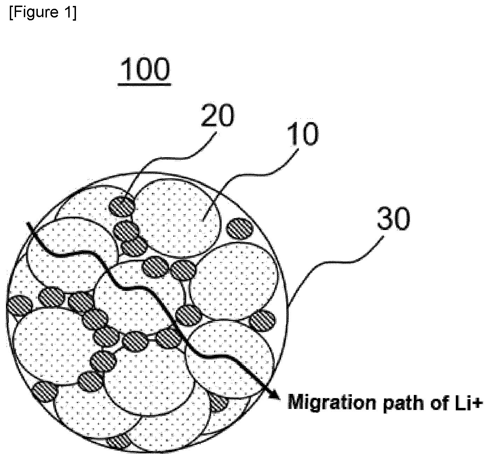

FIG. 1 is a schematic illustration of a composite sulfide-based solid electrolyte according to one Example of the present invention.

Referring to FIG. 1, a composite sulfide-based solid electrolyte according to one Example of the present invention may be secondary particles comprising a plurality of primary particles and a lithium halide represented by Formula 1 below, wherein the primary particles comprise a sulfide-based solid electrolyte, and the lithium halide may be located between the primary particles:

[Formula 1] LiX,

wherein X is any one selected from F, Cl. Br and I.

That is, the lithium halide is not formed as a coating layer on the sulfide-based solid electrolyte primary particles, but is located between the sulfide-based solid electrolyte primary particles, so that it can adsorb external moisture to improve the water resistance of the sulfide-based solid electrolyte, for example, the lithium halide represented by the Formula 1 above may be LiF, LiCI, LiBr or Lil, preferably LiBr.

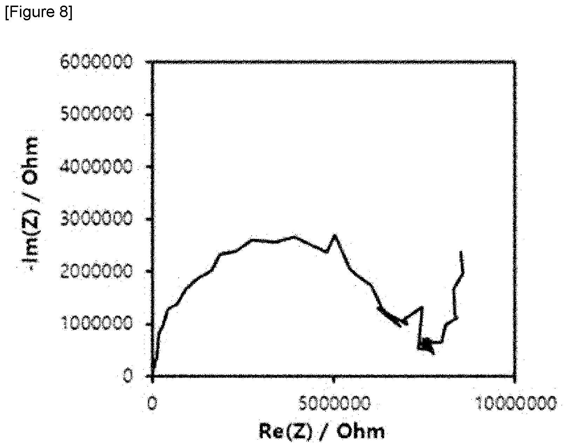

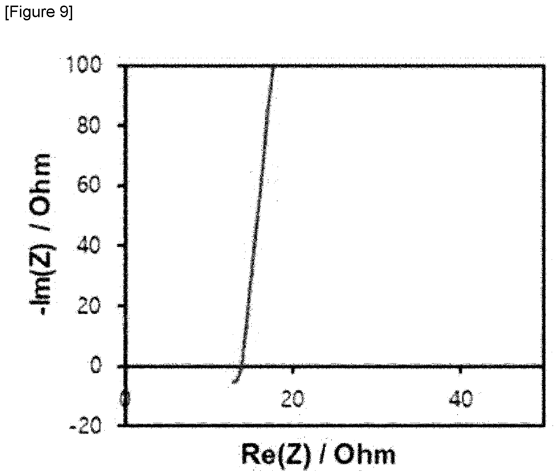

FIGs. 8 and 9 are graphs showing electrochemical impedance spectroscopy (EIS) analysis of sulfide-based solid electrolytes with lithium halide (LiBr) and argyrodite crystal structures, respectively.

Referring to FIGs. 8 and 9, it can be seen that LiBr, a type of lithium halide, can act as a resistive layer having a very high resistivity when applied to a sulfide-based solid electrolyte because of its very low ionic conductivity (9.62×10⁻⁶ mS/cm), compared to the high ionic conductivity of more than 0.1 mS/cm of a sulfide-based solid electrolyte with an argyrodite crystal structure, as shown in the EIS measurement results at 25°Cin FIG. 8.

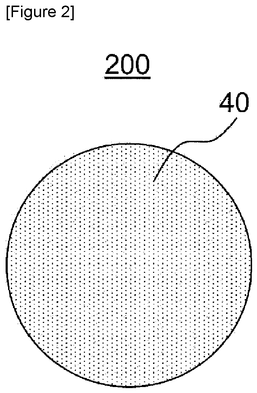

Therefore, if lithium halide is formed as a surface coating layer on the surface of a sulfide-based solid electrolyte as shown in FIG. 2, apart from the water adsorption performance of lithium halide, the resistance at the grain boundary of lithium halide is too large, and ion conduction between sulfide-based solid electrolyte particles is difficult.

In contrast, the composite sulfide-based solid electrolyte according to one Example of the present invention has the advantage of not separately forming a coating layer of lithium halide on the sulfide-based solid electrolyte particles, thereby preventing an increase in internal resistance, while sufficiently imparting water resistance by disposing lithium halide between the sulfide-based solid electrolyte primary particles. Furthermore, by including lithium halide in the form of particles with an average particle size of 0.01 to 3 µm, the conduction of lithium ions (Li⁺) inside the sulfide-based solid electrolyte secondary particles is not significantly hindered.

Referring to the preparation method of the composite sulfide-based solid electrolyte of the present invention described below, the lithium halide according to one Example of the present invention may undergo a process of atomization through ball-milling or the like before being mixed with the sulfide-based solid electrolyte, and in one Example of the present invention, the average particle size (D50) of the lithium halide may be 0.01 to 3 µm, such as 0.01 to 1 µm, 0.01 to 0.5 µm, and preferably 0.01 to 0.1 µm.

If the average particle size of lithium halide is less than 0.01 µm, it may be difficult to maintain the small particle size, which may complicate the manufacturing process of the composite sulfide-based solid electrolyte in the form of secondary particles, and if it exceeds 3 µm, the specific surface area of the lithium halide particles may be relatively reduced, which may reduce the effect of improving the water resistance of the composite sulfide-based solid electrolyte.

The lithium halide is not limited in shape, and may take any shape, for example, but not limited to, a sphere, a plate, a square cone, or a cylinder. The average particle size of the lithium halide may have a different meaning depending on its shape, for example, in the case of a spherical shape, it may mean the diameter of the sphere, in the case of an elliptical shape, it may mean the diameter of the major axis or the diameter of the minor axis.

In one Example of the present invention, the average particle size (D50) of the secondary particles of the composite sulfide-based solid electrolyte may be 0.11 to 100 µm, such as 0.2 to 80 µm, 0.3 to 70 µm, 0.4 to 60 µm, 0.5 to 50 µm, 0.6 to 40 µm, 0.7 to 40 µm, 0.8 to 30 µm, 0.9 to 25 µm, or 1 to 20 µm.

If the average particle size of the secondary particles of the composite sulfide-based solid electrolyte is less than 0.11 µm, the lithium ion conductivity and water resistance of the solid electrolyte may be significantly reduced, and if it exceeds 100 µm, there may be a process problem of forming a solid electrolyte film in the production of all-solid-state batteries using solid electrolytes.

In one Example of the present invention, based on a total of 100 parts by weight of the composite sulfide-based solid electrolyte, the content ratio of sulfide-based solid electrolyte in the primary particle to lithium halide may be 99.9 parts by weight to 0.1 parts by weight to 80 parts by weight to 20 parts by weight, such as 99.5 parts by weight to 0.5 parts by weight to 85 parts by weight to 15 parts by weight, 99 parts by weight to 1 part by weight to 90 parts by weight to 10 parts by weight, and preferably 99 parts by weight to 1 part by weight to 92.5 parts by weight to 7.5 parts by weight.

If the content of lithium halide is less than 0.1% by weight, based on a total of 100% by weight of the composite sulfide-based solid electrolyte, the adsorption capacity for external moisture, i.e., the water resistance of the composite sulfide-based solid electrolyte, may decrease, resulting in a decrease in the ionic conductivity of the solid electrolyte due tohydrogen sulfide gas generation, and if the content is greater than 20% by weight, the content of sulfide-based solid electrolyte primary particles in the composite sulfide-based solid electrolyte may decrease, resulting in a decrease in the lithium ionic conductivity of the electrolyte.

In one Example of the present invention, the average particle size (D50) of the primary particles of the composite sulfide-based solid electrolyte may be 0.1 to 15 µm, for example, 0.2 to 15 µm, 0.3 to 10 µm, and preferably 0.5 to 5 µm.

If the average particle size of the primary particles of the composite sulfide-based solid electrolyte is less than 0.1 µm, the lithium ion conductivity and water resistance of the solid electrolyte may be significantly reduced, and if it exceeds 15 µm, the size of the secondary particles of the composite sulfide-based solid electrolyte containing it increases relatively, and there may be a process problem of forming a solid electrolyte film when manufacturing an all-solid-state battery using a solid electrolyte.

In one Example of the present invention, the sulfide-based solid electrolyte in the primary particle may be represented by Formula 2 below:

[Formula 2] LiₖM¹ₗSₘX¹ₙ,

wherein M¹ is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, Wor La, X¹ is F, Cl, Br, I, Se, Te or O, and 0<k≤6, 0<l≤6, 0<m≤6, and 0≤n≤6.

For example, in Formula 2, M¹ may be B, Si, Ge, P or N.

For example, in Equation 2, X¹ may be F, Cl, Br, I or O.

For example, the sulfide-based solid electrolyte represented by Formula 2 may be at least one selected from the group consisting of Li₂S-P₂S₅, Li₂S-P₂S₅-LiX, where X is a halogen atom, Li₂S-P₂S₅-Li₂O, LizS-PzSs-LizO-Lil, Li₂S-SiS₂, Li₂S-SiS₂-Lil, Li₂S-SiS₂-LiBr, Li₂S-SiS₂-LiCl, Li₂S-SiS₂-B₂S₃-Lil, Li₂S-SiS₂-P₂S₅-Lil, Li₂S-B₂S₃, Li₂S-P₂S₅-ZₘSₙ, where m and n are positive numbers, and Z is any one of Ge, Zn and Ga, Li₂S-GeS₂, Li₂S-SiS₂-Li₃PO₄, Li₂S-SiS₂-LiₚMO_{q}, where p and q are positive numbers, and M is any one of P, Si, Ge, B, Al, Ga and In, Li₇₋ₓPS₆₋ₓClₓ, where 0≤x≤2, Li₇₋ₓPS₆₋ₓBrₓ, where 0≤x≤2, and Li₇₋ₓPS₆₋ₓIₓ, where 0≤x≤2.

Furthermore, the sulfide-based solid electrolyte may preferably be a solid electrolyte having an argyrodite crystal structure comprising one or more selected from the group consisting of Li₆PS₅Cl, Li₆PS₅Br and Li₆PS₅I.

The composite sulfide-based solid electrolyte according to the present invention can be prepared by the following preparation method. Hereinafter, each step of the preparation method of the sulfide-based solid electrolyte of the present invention is described in detail.

First, to prepare a composite sulfide-based solid electrolyte according to the present invention, a sulfide-based solid electrolyte and lithium halide represented by the following formula 1 are prepared:

[Formula 1] LiX

(wherein X is any one selected from F, Cl. Br and I).

Since the sulfide-based solid electrolyte and lithium halide represented by Formula 1 are identical to those described above, the detailed description thereon is omitted hereinafter.

Next, the lithium halide is crushed to form a particulate form.

The step of grinding the lithium halide may not be limited to a particular method, and for example, the grinding may be carried out by ball-milling through 5 to 20 repeated cycles of ball-milling, with each cycle of ball-milling performed at 100 to 2,000 rpm for 5 to 30 minutes. If the grinding speed and grinding time of ball-milling are less than the above numerical range, it may not be possible to fill the empty space between the primary particles of the sulfide-based solid electrolyte well, and the effect of improving the water resistance of the sulfide-based solid electrolyte may be insignificant, and if they exceed the above numerical range, the time and cost for manufacturing a solid electrolyte increase, and there is a problem of excessive heat generation.

In order to further increase the water adsorption capacity of the lithium halide, preferably before grinding the lithium halide, the method may further comprise the step of vacuum drying to remove moisture from the lithium halide, and, although not limited to a particular method, the method may pre-conduct the step of placing the lithium halide before grinding in a vacuum oven and drying it for 24 to 48 hours at a temperature of 25 to 80 °C.

Lithium halide that has been ground through ball-milling as described above may have an average particle size (D50) of 0.01 to 3 µm.

Finally, the sulfide-based solid electrolyte and the ground lithium halide are mixed to form a composite sulfide-based solid electrolyte in the form of secondary particles, wherein the lithium halide in the particulate state is located between the sulfide-based solid electrolyte primary particles.

In one Example of the present invention, the sulfide-based solid electrolyte of the primary particles and the lithium halide may be mixed in a ratio of 99.9 parts by weight:0.1 parts by weight to 80 parts by weight:20 parts by weight, for example, 99.5 parts by weight:0.5 parts by weight to 85 parts by weight: 15 parts by weight, 99 parts by weight: 1 part by weight to 90 parts by weight: 10 parts by weight, and preferably 99 parts by weight: 1 part by weight to 92.5 parts by weight:7.5 parts by weight, based on a total of 100 parts by weight of the composite sulfide-based solid electrolyte.

The present invention also provides an all-solid-state battery comprising a composite sulfide-based solid electrolyte as described above. The all-solid-state battery includes a positive electrode, a negative electrode, and a solid electrolyte film, wherein at least one of the positive electrode, negative electrode, and solid electrolyte film may include a composite sulfide-based solid electrolyte having the aforementioned properties.

In one Example of the present invention, the solid electrolyte film is an ionically conductive sheet interposed between a positive electrode and a negative electrode in an all-solid-state battery to act as an insulating and ionically conductive channel, preferably having an ionic conductivity of 1.0 × 10⁻⁵ S/cm or greater. The solid electrolyte film may comprise a composite sulfide-based solid electrolyte according to the present invention, and may further comprise other electrolyte materials as described hereinafter.

In the present invention, the positive electrode and negative electrode comprise a current collector and an electrode active material layer formed on at least one surface of the current collector, wherein the active material layer includes a plurality of electrode active material particles and an electrolyte material. The positive electrode and negative electrode may include a composite sulfide-based solid electrolyte according to the present invention as the electrolyte material, and may further include other electrolyte materials as described below.

Further, each of the electrodes may further comprise one or more of a conductive material and a binder resin, as desired. Further, the electrodes may further comprise various additives for the purpose of complementing or improving the physicochemical properties of the electrodes.

In the present invention, the negative electrode active material may include lithium metal as the negative electrode active material of the lithium ion secondary battery, and any material that can be used as the negative electrode active material may be used. For example, the negative electrode active material may include one or two or more selected from the group consisting of carbon such as non-graphitized carbon or graphitized carbon; LiₓFe₂O₃ (wherein 0≤x≤1), LiₓWO₂ (wherein 0≤x≤1), or SnₓMe₁₋ₓMe'_{y}O_{z} (wherein Me is Mn, Fe, Pb or Ge; Me' is Al, B, P or Si, Group 1, 2 or 3 elements of the periodic table, or halogens; 0<x≤1; 1≤y≤3; and 1≤z≤8); lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄or Bi₂O₅; conductive polymers such as polyacetylene; Li-Co-Ni based materials; titanium oxides; and lithium titanium oxides.

In the case where the electrode is a positive electrode, the electrode active material can be any material that can be used as a positive electrode active material in a lithium ion secondary battery. For example, the positive electrode active material may include, but is not limited to,a layered compound such as lithium cobalt oxide (LiCoOz) or lithium nickel oxide (LiNiOz), or a compound substituted with one or more transition metals; lithium manganese oxide represented by formula Li₁₊ₓMn₂₋ₓO₄ (wherein x is 0 to 0.33), such as LiMnO₃, LiMn₂O₃, or LiMnO₂; lithium copper oxide (Li₂CuO₂); vanadium oxide, such as LiV₃O₃, LiV₃O₄, V₂O₅, or Cu₂V₂O₇; Ni site-type lithium nickel oxide represented by LiNi₁₋ₓMₓO₂ (wherein M is Co, Mn, Al, Cu, Fe, Mg, B or Ga, and x is 0.01 to 0.3); lithium manganese complex oxide represented by formula LiMn₁₋ₓMₓO₂(wherein M is Co, Ni, Fe, Cr, Zn or Ta, and x is 0.01 to 0.1) or Li₂Mn₃MO₈ (wherein M is Fe, Co, Ni, Cu or Zn); lithium manganese complex oxide with a spinel structure represented by LiNiₓMn₂₋ₓO₄; LiMn₂O₄, wherein a portion of the Li is substituted by an alkaline earth metal ion; disulfide compound; and Fe₂(MoO₄)₃.

In the present invention, the current collector is an electrically conductive material such as a metal plate, and any suitable one can be used according to the polarity of the electrode of the current collector known in the field of secondary batteries.

In the present invention, such a conductive material is typically added in an amount of 1 % by weight to 30% by weight, based on the total weight of the mixture containing the electrode active material. These materials are not particularly limited, as long as they are conductive without causing any chemical changes in the battery, for example, they may include one or two or more mixtures selected from the group consisting of graphite such as natural or artificial graphite; carbon black such as carbon black, acetylene black, ketjen black, channel black, furnace black, lamp black or thermal black; conductive fibers such as carbon fibers or metal fibers; metal powders such as carbon fluoride, aluminum or nickel powder; conductive whiskers such as zinc oxide or potassium titanate; conductive metal oxides such as titanium oxide; or conductive materials such as polyphenylene derivatives.

In the present invention, the binder resin is not particularly limited as long as it is a component that assists in the bonding of the active material and the conductive material or the bonding to the current collector, for example, polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene butadiene rubber, fluorinated rubber, and various copolymers. The binder resin may typically be included in an amount of 1% by weight to 30% by weight, or 1% by weight to 10% by weight, based on 100% by weight of the electrode layer.

In the present invention, each of the electrode active material layers may include one or more additives such as oxidation-stable additives, reduction-stable additives, flame retardants, heat stabilizers, or antifogging agents, as needed.

In the present invention, the all-solid-state battery may include a composite sulfide-based solid electrolyte according to the present invention as a solid electrolyte material. In addition, it may further include one or more of a polymer-based solid electrolyte, an oxide-based solid electrolyte, and a sulfide-based solid electrolyte.

The polymeric solid electrolyte is a composite of a lithium salt and a polymeric resin, that is, a polymeric electrolyte material in the form formed by the addition of a polymeric resin to a solvated lithium salt, and may exhibit an ionic conductivity of about 1×10⁻⁷ S/cm or more, preferably about 1×10⁻⁵ S/cm or more.

Non-limiting examples of the polymeric resins may include at least one of polyether-based polymers, polycarbonate-based polymers, acrylate-based polymers, polysiloxane-based polymers, phosphagen-based polymers, polyethylene derivatives, alkylene oxide derivatives such as polyethylene oxide, phosphate ester polymers, polyagitation lysine, polyester sulfide, polyvinyl alcohol, polyvinylidene fluoride, and polymers comprising ionic dissociation groups. Further, the polymeric electrolyte may be a polymeric resin, for example, a branched copolymer, a comb-like polymer, or a crosslinked polymeric resin copolymerizing an amorphous polymer such as PMMA, polycarbonate, polysiloxane (PDMS), and/or phosphazene with a comonomer on a polyethylene oxide (PEO) main chain, and may include one or more of the foregoing.

In the electrolyte of the present invention, the aforementioned lithium salts are ionizable lithium salts, which can be represented by Li⁺X⁻. The anions of such lithium salts are not particularly limited, but may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻ ,CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The oxide-based solid electrolyte material comprises oxygen (O) and has the ionic conductivity of a metal in Group 1 or 2 of the periodic table. Non-limiting examples may include at least one selected from the group consisting of, but is not limited to, LLTO-based compounds, Li₆La₂CaTa₂O₁₂, Li₆La₂ANb₂O₁₂(wherein A is Ca or Sr), Li₂Nd₃TeSbO₁₂, Li₃BO_{2.5}N_{0.5}, Li₉SiAlO₈, LAGP-based compounds, LATP-based compounds, Li₁₊ₓTi₂₋ₓAlₓSi_{y}(PO₄)_{3-y} (wherein 0≤x≤1, and 0≤y≤1), LiAlₓZr₂₋ₓ(PO₄)₃ (wherein 0≤x≤1, and 0≤y≤1), LiTiₓZr₂₋ₓ(PO₄)₃ (wherein 0≤x≤1, and 0≤y≤1), LISICON-based compounds, LIPON-based compounds, perovskite-based compounds, nasicon-based compounds, and LLZO-based compounds.

The sulfide-based solid electrolyte material may be, but is not limited to, the sulfide-based solid electrolyte represented by Formula 2 above.

The present invention also provides a secondary battery having the aforementioned structure. The present invention also provides a battery module comprising the secondary battery as a unit cell, a battery pack comprising the battery module, and a device comprising the battery pack as a power source. Specific examples of such devices may include, but are not limited to, a power tool powered by an electric motor; an electric vehicle, such as an electric vehicle (EV), a hybrid electric vehicle (HEV), or a plug-in hybrid electric vehicle (PHEV); an electric two-wheeled vehicle, such as an electric bicycle (E-bike), an electric scooter (E-scooter), or an electric golf cart; and a power storage system.

### [Mode for Practicing the Invention]

Specific Examples of the present invention are set forth below. However, the Examples described below are intended only to specifically illustrate or describe the present invention, and are not intended to limit the present invention. In addition, matters not described herein are sufficiently inferred by those skilled in the art and are omitted herein.

### Example 1: Preparation of a composite sulfide-based solid electrolyte

(1) LiBr was prepared as lithium halide, and it was placed in a vacuum oven to remove internal moisture and vacuum dried at 80 °C for 24 hours.
(2) 5 g of dehydrated LiBr was placed in a ball mill containing 20 zirconia balls (diameter: 10 mm), and high-energy ball-milling at a rotational speed of 750 rpm for 15 minutes was performed as one cycle, and a total of 16 cycles of ball-milling were performed to obtain crushed LiBr.
(3) In the glove box, the crushed LiBr and a sulfide-based solid electrolyte with an argyrodite crystal structure, Li₆PS₅Cl, were mixed in a content ratio of 5 parts by weight:95 parts by weight, and a composite sulfide-based solid electrolyte was prepared by mixing them.

### Example2: Preparation of a composite sulfide-based solid electrolyte

A composite sulfide-based solid electrolyte was prepared as in Example 1, except that crushed LiBr and Li₆PS₅Cl,a sulfide-based solid electrolyte with an argyrodite crystal structure, were mixed in a content ratio of 10 parts by weight: 90 parts by weight.

### Example 3: Preparation of a composite sulfide-based solid electrolyte

A composite sulfide-based solid electrolyte was prepared as in Example1, except that crushed LiBr and Li₆PS₅Cl, a sulfide-based solid electrolyte with an argyrodite crystal structure, were mixed in a content ratio of 15 parts by weight:85 parts by weight.

### Comparative Example: Preparation of a sulfide-based solid electrolyte that does not contain lithium halide

Unlike Examples 1 to 3, the solid electrolyte was prepared using only the sulfide-based solid electrolyte Li₆PS₅Cl with an argyrodite crystal structure, which does not contain lithium halide.

### [Experimental Example 1: Energy dispersive X-ray spectroscopy (EDX) analysis of composite sulfide-based solid electrolytes]

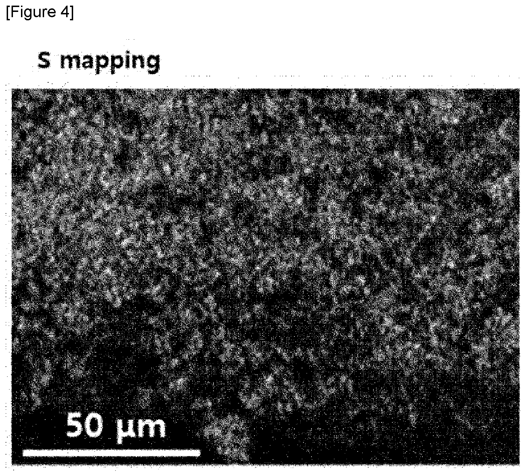

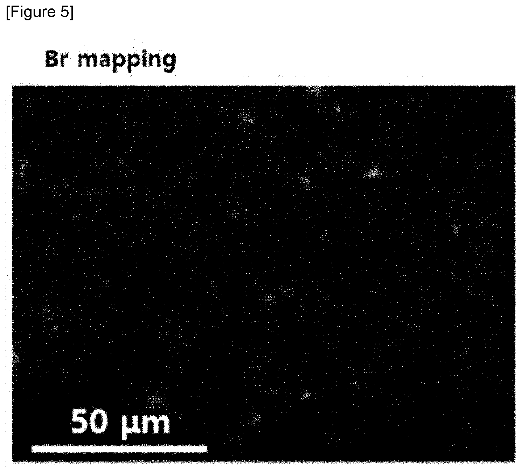

Energy dispersive X-ray spectroscopy (EDX) experiments were performed to determine the S and Br elemental components in the composite sulfide-based solid electrolyte prepared according to Example 1, and the results are shown in FIGs. 4 and 5.The EDX measurement device was a JSM7900F manufactured from JEOL.

Referring to FIGs. 4 and 5, it can be seen that, in the case of the composite sulfide-based solid electrolyte according to Example1 of the present invention, LiBr was not formed as a coating layer of the sulfide-based solid electrolyte, and LiBr having fine particles is located between the primary particles of the sulfide-based solid electrolyte.

### [Experimental Example 2: Measurement of ionic conductivity of composite sulfide-based solid electrolytes and analysis of ionic conductivity decrease rate]

For each of the composite sulfide-based solid electrolytes according to Examples 1 to 3 and the sulfide-based solid electrolyte according to Comparative Example 1, the ionic conductivity and the rate of decrease in ionic conductivity according to exposure to moisture were measured and analyzed.

### (1) Measurement of the ionic conductivity

The composite sulfide-based solid electrolyte according to Examples 1 to 3 and the sulfide-based solid electrolyte according to Comparative Example 1, each made into a specimen of 6 mm in diameter and 1 mm in thickness, were interposed between the Al-C current collectors and vacuum sealed in an aluminum pouch to prepare an all-solid-state battery.

The all-solid-state battery was attached to a jig to apply a pressure of 250 MPa, and the ionic conductivity was measured using impedance spectroscopy, and the results are shown in Table 1 below.

Referring to Table 1, for the composite sulfide-based solid electrolyte of Examples 1 to 3, it was found that the inclusion of additional LiBr between the sulfide-based solid electrolyte primary particles did not significantly reduce the overall ionic conductivity of the composite sulfide-based solid electrolyte.

This can be predicted to be due to the fact that by micronizing lithium halides such as LiBr and mixing them with the sulfide-based solid electrolyte, LiBr did not interfere with the migration path of lithium ions (Li⁺) in the composite sulfide-based solid electrolyte and thus did not significantly affect the conduction of lithium ions.

### (2) Measurement of the rate of decrease in ionic conductivity

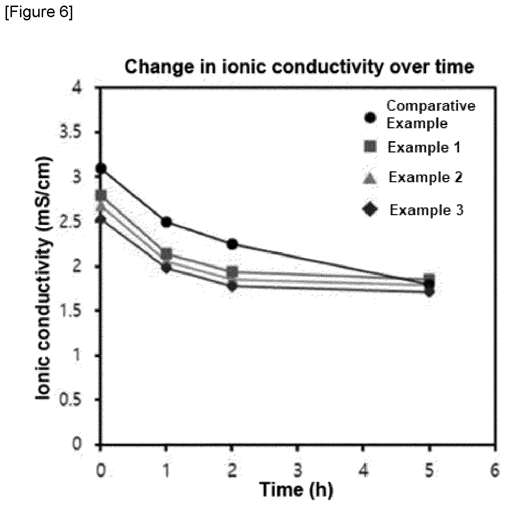

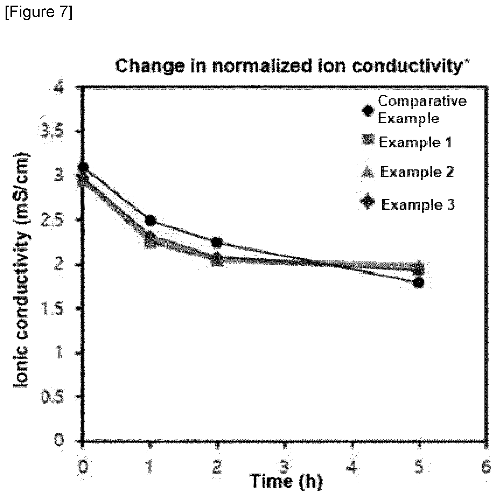

Two grams each of the composite sulfide-based solid electrolyte according to Examples 1 to 3 and the sulfide-based solid electrolyte according to Comparative Example 1 were evenly spread on a plate and exposed to a dry room environment with a dew point of -45 °C (humidity of 0.46% at 21°C) for a total of 5 hours to measure the rate of decrease of the ionic conductivity of the solid electrolyte over time, and the results are shown in Table 1, and FIGs. 6 and 7 below. FIG. 7 is a normalized ionic conductivity graph of only the pure sulfide-based solid electrolytes, excluding the ionic conductivity change rate due to LiBr, from the ionic conductivity measurement results according to FIG. 6.

The measurement of ionic conductivity over time was performed as described in '(1) Measurement of the ionic conductivity' above.

Referring to Table 1, and FIGs. 6 and 7, it can be seen that for the composite sulfide-based solid electrolytes according to Examples 1 to 3, the ionic conductivity decrease rate of the solid electrolyte over time is small compared to the solid electrolyte according to Comparative Example 1 due to the inclusion of lithium halide in a particulate state capable of adsorbing moisture in the solid electrolyte, resulting in improved water resistance.

**[Table 1]**

| | Example 1 | Example2 | Example3 | Comparative Example 1 |
|---|---|---|---|---|
| Oh ionic conductivity (mS/cm) | 2.79 | 2.67 | 2.53 | 3.12 |
| 5h ionic conductivity (mS/cm) | 1.84 | 1.79 | 1.71 | 1.79 |
| Ionic conductivity retention (%) | 66 | 67 | 68 | 57 |
| Ionic conductivity decrease rate (mS/cm/h) | 0.191 | 0.176 | 0.164 | 0.266 |

Although the preferred Examples of the present invention have been described in detail above, the scope of the present invention is not limited thereto, and various modifications and improvements by those skilled in the art utilizing the basic concepts of the present invention as defined in the following claims are also within the scope of the present invention.

### [Reference numerals]

10: Sulfide-based solid electrolyte primary particle
20: Lithium halide
30: Composite sulfide-based solid electrolyte secondary particle
40: Sulfide-based solid electrolyte
100: Composite sulfide-based solid electrolyte
200: Sulfide-based solid electrolyte

## Claims

1. A composite sulfide-based solid electrolyte which is secondary particles comprising a plurality of primary particles and lithium halide represented by the following formula 1,
wherein the primary particles comprise a sulfide-based solid electrolyte,
wherein the lithium halide is located between the primary particles:
[Formula 1] LiX
wherein X is any one selected from F, Cl. Br and I.

2. The composite sulfide-based solid electrolyte according to claim 1, wherein the lithium halide has an average particle size D50 of 0.01 to 3 µm

3. The composite sulfide-based solid electrolyte according to claim 1, wherein the average particle size D50 of the secondary particles is 0.11 to 100 µm.

4. The composite sulfide-based solid electrolyte according to claim 1, wherein, based on a total of 100 parts by weight of the composite sulfide-based solid electrolyte, the content ratio of the sulfide-based solid electrolyte in the primary particle and lithium halide is 99.9 parts by weight: 0.1 parts by weight to 80 parts by weight: 20 parts by weight.

5. The composite sulfide-based solid electrolyte according to claim 1, wherein the sulfide-based solid electrolyte comprises an argyrodite-type crystal structure.

6. The composite sulfide-based solid electrolyte according to claim 1, wherein the primary particles have an average particle size D50 of 0.1 to 15 µm.

7. The composite sulfide-based solid electrolyte according to claim 1, wherein, in the composite sulfide-based solid electrolyte of the secondary particle, the lithium halide is not formed as a coating layer on the primary particles.

8. The composite sulfide-based solid electrolyte according to claim 1, wherein the sulfide-based solid electrolyte of the primary particles is represented by the formula 2 below:
[Formula 2] LiₖM¹ₗSₘX¹ₙ
wherein M¹ is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, Wor La, X¹ is F, Cl, Br, I, Se, Te or O, and 0<k≤6, 0<l≤6, 0<m≤6, and 0≤n≤6.

9. An all-solid-state battery comprising the composite sulfide-based solid electrolyte according to any one of claims 1 to 8.

10. A method of preparing a composite sulfide-based solid electrolyte, comprising the steps of preparing a sulfide-based solid electrolyte and lithium halide represented by Formula 1 below;
grinding the lithium halide; and
mixing the ground lithium halide with the sulfide-based solid electrolyte:
[Formula 1] LiX
wherein X is any one selected from F, Cl. Br, and I.

11. The method of preparing a composite sulfide-based solid electrolyte according to claim 10, wherein the method further comprises the step of vacuum drying the lithium halide to remove moisture, prior to grinding the lithium halide.

12. The method of preparing a composite sulfide-based solid electrolyte according to claim 10, wherein the lithium halide is formed by grinding through 5 to 20 repeated cycles of ball-milling, with each cycle of ball-milling performed at 100 to 2,000 rpm for 5 to 30 minutes.

13. The method of preparing a composite sulfide-based solid electrolyte according to claim 10, wherein the ground lithium halide has an average particle size D50 of 0.01 to 3 µm.

14. The method of preparing a composite sulfide-based solid electrolyte according to claim 10, wherein the ground lithium halide and the sulfide-based solid electrolyte are mixed in a content ratio of 99.9 parts by weight: 0.1 parts by weight to 80 parts by weight: 20 parts by weight, based on a total of 100 parts by weight of the composite sulfide-based solid electrolyte.
